# EUROPÄISCHE PATENTSCHRIFT

(11) **EP 1 569 288 B1**
(45) Veröffentlichungstag und Bekanntmachung des Hinweises auf die Patenterteilung: **17.03.2010**
(21) Anmeldenummer: 05001562.7
(22) Anmeldetag: 26.01.2005
(51) Int. Cl.: H01M 2/20, H01M 2/36, H01M 2/38, H01R 13/00

(54) **Ladesteckverbindersatz mit Gehäuseadapter**
Connection plug for charging with a housing adapter
Fiche de connection pour recharge avec un adaptateur pour emboitement

(30) Priorität: 26.02.2004 DE 202004002950 U
(43) Veröffentlichungstag der Anmeldung: 31.08.2005
(73) Patentinhaber: Schaltbau GmbH, 81677 München (DE)
(72) Erfinder: Fraczek, Jarik, 81827 München (DE)
(74) Vertreter: Grünecker, Kinkeldey, Stockmair & Schwanhäusser Anwaltssozietät

(56) Entgegenhaltungen:
- EP-A- 0 924 781
- DE-U1- 9 114 909
- US-A- 5 637 006

## Beschreibung

Die Erfindung betrifft einen Ladesteckverbindersatz mit einem ein Steckergehäuse aufweisenden Stecker und einer ein Dosengehäuse aufweisenden Dose.

Ein solcher Ladesteckverbindersatz ist als Strom übertragendes Element als Teil einer an einem Gabelstapler gekoppelten Vorrichtung bekannt.

Aus dem Stand der Technik, etwa der europäischen Druckschrift EP 0 821 444 B1 und des Gebrauchsmuster DE 9114909.6 ist ein Ladesteckverbindersatz bekannt.

Dieser dort offenbarte Ladesteckverbindersatz weist ein Steckergehäuse und ein Dosengehäuse auf. Das Steckergehäuse wird in das Dosengehäuse eingesteckt. Das Dosengehäuse weist eine Schürze auf, welche zwei Stiftkontakte beherbergt. Das Steckergehäuse weist einen Steckvorsprung auf. Der Steckvorsprung weist zwei zueinander parallele Stiftkontaktaufnahmeausnehmungen auf. Im zusammengesteckten Zustand von Stecker und Dose stecken die Stiftkontakte in den Stiftkontaktaufnahmeausnehmungen und der Steckvorsprung in der Schürze der Dose. Zwischen den beiden Stiftkontakten und dem Stiftkontaktaufnahmeausnehmungen sind sowohl in der Dose als auch in dem Stecker jeweils ein Codierstift parallel zur Längsachse von Stecker und Dose angebracht. In dem Stecker, insbesondere im Steckvorsprung ist eine Codierstiftaufnahmeausnehmung im zusammengebauten Zustand von Dosengehäuse und Steckgehäuse eingebracht. Diese Codierstiftaufnahmeausnehmung nimmt einen Codierstift auf. Auf der Dosenseite in ein Codierstift befestigt. Dieser Codierstift ist derart ausgestaltet, dass er im zusammengesteckten Zustand in die Codierstiftaufnahmeausnehmung des Steckers passt. Durch zueinander differierenden Einbau der Codierstifte in Dose oder Stecker wird verhindert, dass der Stecker oder die Dose zusammenpassen. Dadurch ist gewährleistet, dass der ihm entsprechende Stecker zu der ihm entsprechenden Dose einsteckbar ist. Durch Ladesteckverbinderbausätze der entsprechenden Gattung der Erfindung, werden hohe Ströme geleitet. Diese Ströme werden zum Laden von Batterien an Gabelstaplern eingesetzt. Zusätzlich gibt es bei Ladesteckverbindem der erfindungsgemäßen Gattung weitere zusammenpassende Öffnungen in Stecker und Dose, in denen entweder Pilotkontakte oder aber Fluide geführt werden können.

Zu diesem Zweck ist es vorgesehen, Adapter in dem Stecker und in die Dose einzusetzen. Die Adapter sind in Längsrichtung von Stecker und Dose einsetzbar und lösbar vorgesehen.

Die zwei Adapter sind dosen- und steckerseitig unterschiedlich ausgestaltet. Einer der zwei Adapter ist als Steckadapter ausgeführt. Dieser Steckadapter weist zwei Vorsprünge auf, in denen zwei Fluidkanäle verlaufen. Diese Fluidkanäle münden in einem gemeinsamen Fluidkanal des Adapters. Der Fluidkanal des Steckadapters endet ebenso in einem Steckansatz. Dieser Steckansatz ist hohl, so dass Fluide von dem einen Ende des Steckadapters zu dem anderen Ende des Steckadapters gelangen. Der dazu passende Aufnahmeadapter, der in dem anderen Bauteil von Stecker oder Dose eingebaut ist, nimmt in dem zusammengesteckten Zustand von Stecker und Dose die Steckvorsprünge des Steckadapters, in denen die Fluidkanäle verlaufen, auf. Eine fluiddichte Verbindung in Form einer Kupplung wird somit im eingesteckten Zustand von dem Stecker in der Dose hergestellt.

Im Stand der Technik zeigt sich jedoch ein deutlicher Nachteil darin, dass die Adapter in das Innere des Steckers oder der Dose eingebaut sind. Eine aufwendige Demontage ist notwendig, um einen Adapter zu entfernen oder zu ersetzen.

Es ist somit die Aufgabe der vorliegenden Erfindung, unter Verwendung von Standardbauteilen einen vielseitiger verwendbaren Ladesteckverbindersatz zu gestalten.

Diese Aufgabe wird dadurch gelöst, dass sowohl in dem Stecker der Dose zugeordnet, ein Wechseladapter eingesetzt wird, als auch in die Dose, dem Stecker zugewandt ein Wechseladapter eingesetzt wird, wobei wenigstens einer der Wechseladapter auswechselbare Nebenkontakte und/oder Fluidführungen aufweist, wobei der eine Wechseladapter mit zumindest einem Teil des Endes des einen Wechseladapters in zumindest einen Teil des anderen Wechsel adapters einsteckbar ist, wobei sowohl der in den Stecker eingesetzte Wechseladapter wenigstens zum Teil die Außenfläche des Steckergehäuse ausbildet, als auch der in die Dose eingesetzte Wechseladapter wenigstens einen Teil der Außenfläche des Dosengehäuses ausbildet.

Dadurch ist es möglich einen Wechseladapter von außerhalb des Steckergehäuses oder Dosengehäuses schnell und einfach auszuwechseln. So kann in einem Steckergehäuse ein anderer Wechseladapter eingesetzt werden, ohne dass der Stecker, insbesondere das Steckergehäuse, zerlegt werden muss. Es ist insbesondere vorteilhaft, wenn diese Wechselaktion ohne zu Hilfenahme von Werkzeugen, wie Schraubendrehem oder Zangen möglich ist. Einfache Stecklösungen sind deshalb hier besonders von Vorteil. Dasselbe gilt auch für Wechseladapter die in das lose Gehäuse eingesetzt werden. Durch ein schnelles Wechseln des Wechseladapters ist es auch möglich entweder Fluide durch den Ladesteckverbindersatz zusätzlich zu elektrischen Strömen oder ausschließlich elektrische Ströme zu führen. Auch ist es möglich in dem Wechseladapter Steuerströme zu übertragen. Der Ladesteckverbindersatz kann somit diese Ströme, zum Steuern von Funktionen und Bauteilen, als auch Starkströme übertragen.

Im Folgenden werden besondere Ausführungsbeispiele anhand von Unteransprüchen näher erläutert.

Besonders vorteilhaft ist es, wenn der Wechseladapter nur einen Fluidkanal zum Durchführen von Fluiden aufweist. Im zusammengesteckten Zustand von Stecker und Dose wird Fluid durch den einen Fluidkanal des einen Wechseladapters in den anderen Fluidkanals des anderen Wechseladapters übertragen, ohne dass Strömungswiderstände überwunden werden müssen. Ein Aufspalten eines Fluidkanals in zwei weitere Fluidkanäle in einem Wechseladapter, dass spätere Zusammenführen zweier Fluidkanäle in einem gemeinsamen Fluidkanal in dem anderen Wechseladapter wird dadurch vorteilhafterweise vermieden.

Formtechnisch ist besonders vorteilhaft, wenn der eine Wechseladapter einen hohlen Zylinder als Ende aufweist. Ein solcher Wechseladapter lässt sich durch spritzgusstechnische Maßnahmen einfach erreichen.

Eine weitere vorteilhafte Ausgestaltung ist dadurch gekennzeichnet, dass der andere Wechseladapter eine zylindrische Vertiefung in Längsrichtung des Wechseladapters in Verlängerung des Fluidkanals des Wechseladapters aufweist. In einer solchen Ausgestaltung ist es besonders einfach gewährleistet, dass die Wechseladapter von Stecker und Dose im zusammengesteckten Zustand von Stecker und Dose eine fluiddichte Verbindung ergeben. Der hohle Zylinders des einen Wechseladapters überträgt nach Eindringen in die zylindrische Vertiefung Fluid aus dem Fluidkanal des einen Wechseladapters in den Fluidkanal des anderen Wechseladapters Vorteilhafterweise.

Wenn der Wechseladapter zwei zueinander parallele Fluidführungen in Form von Fluidkanälen aufweist, so ist vorteilhafterweise in dieser Ausgestaltung eine Kombination mit bereits bekannten Elementen aus dem Stand der Technik insbesondere mit Steckern oder Dosen die zwei zueinander parallele Fluidführungen in Form von Fluidkanälen aufweisen möglich.

Eine besonders einfache Steckverbindung lässt sich in einer Variante dann realisieren, wenn der Wechseladapter zwei hohle Zylinder als Enden auf einer Seite des Wechseladapters aufweisen. Wenn die zwei hohlen Zylinder im zusammengesteckten Zustand von Dosengehäuse und Steckergehäuse in zwei zylindrische Vertiefungen des anderen Wechseladapters dichtend eingesteckt sind, so lässt sich ein weiterer Vorteil in dieser Ausgestaltungsvariante realisieren. Der Vorteil bekundet sich u.a. in einer fluiddichten einfach zu formenden Verbindung zwischen Standardbauteilen und der Erfindung.

Die Multifunktionalität des Ladesteckverbindersatzes lässt sich in einer Variante dadurch erhöhen, dass in zumindest einen der Fluidkanäle des Wechseladapters Mess- und/oder Schaltelemente einsetzbar sind.

Wenn der eine Wechseladapter im in dem Gehäuse der Dose oder des Steckers eingesetzten Zustand, dem in dem Stecker oder die Dose eingesetzten Aufnahmeadapter gegenüberliegend zwei elektrische Nebenkontakte aufweist, so lässt sich in dieser Variante auf einfache Art und Weise Niederstrom zum Steuern von Aggregaten übertragen. Nebenkontakte werden im weiteren gleichbedeutend zu Pilotkontakten bezeichnet.

Wenn der andere Wechseladapter zwei Nebenkontaktaufnahmen zum Aufnehmen zweier elektrischer Nebenkontakte des einen Wechseladapters aufweist, so lässt sich der Stecker schnell in die Dose stecken und sicher sowohl Starkstrom als auch Niederstrom über die Stiftkontakte und die Nebenkontakte übertragen.

Die Funktionalität des Ladesteckverbindersatzes lässt sich durch den Einsatz von Strom,-Lichtquellen- oder Näherungsschalter als Mess- und/oder Schaltelemente in einer Variante Vorteilhafterweise weiter erhöhen.

Besonders vorteilhaft ist es auch, wenn zumindest einer der Wechseladapter in einer Variante spritzgusstechnisch hergestellt ist.

Wenn der Fluidkanal in einem Steckvorsprung endet, lässt sich in einer weiteren Ausgestaltungsform auf schnelle, vorteilhafte Weise der eine Fluidkanal mit dem anderen Fluidkanal verbinden.

Eine besonders sichere, und nur mit zusätzlicher Gewalt lösbare Ausgestaltungsvariante ergibt sich vorteilhafterweise dann, wenn zumindest einer der Steckvorsprünge radiale Haltevorsprünge aufweist.

Wenn zumindest einer der Steckvorsprünge in dem der Fluidkanal endet, radiale Vertiefungen zur Aufnahme von Dichtringen aufweist, so lässt sich vorteilhafterweise in dieser Variante eine besonders dichte Verbindung der Fluidkanäle erreichen.

Um die Kosten beim Herstellen des Lagersteckverbindersatzes zu minimieren, ist es von besonderem Vorteil, wenn der Wechseladapter zu einer Ebene durch die Längsachse des Wechseladapters symmetrisch aufgebaut ist. Besonders vorteilhaft ist auch eine Variante, in der der Wechseladapter eine axiale abstehende Befestigungslasche aufweist.

Im Folgenden werden Ausführungsbeispiele der vorliegenden Erfindung anhand einer Zeichnung näher erläutert.

Es zeigen:
- Figur 1: eine Dose mit Dosengehause in perspektivischer Ansicht des erfindungsgemaßen Ladesteckverbindersatzes mit einem Wechseladapter, der einen Steckvorsprung aufweist,
- Figur 2: eine perspektivische Ansicht des Steckergehäuses von unten mit Blick auf die Stiftkontaktaufnahmeausnehmungen und die Codierstiftaufnahme mit darin integrierten Codierstift und unterhalb davon befindlichen Wechseladapter mit einer zylindrischen Vertiefung,
- Figur 3: eine perspektivische Ansicht von oben auf das zusammengesteckte Steckergehäuse und das Dosengehäuse aus den Figuren 1 und 2,
- Figur 4: einen Wechseladapter in perspektivischer Ansicht von oben, wie er in dem Stecker aus Figur 2 verbaut ist,
- Figur 5: einen Wechseladapter in perspektivischer Ansicht von unten wie aus Figur 4 bekannt,
- Figur 6: eine Ansicht von oben auf den Wechseladapter aus Figur 4 und Figur 5,
- Figur 7: eine Seitenansicht des Wechseladapters aus den Figuren 4 bis 6,
- Figur 8: einen Schnitt durch den Wechseladapter aus den Figuren 4 bis 7 entlang einer Linie VIII aus Figur 6,
- Figur 9: eine Schnittansicht durch den Wechseladapter aus den Figuren 4 bis 8 entlang der Linie IX aus Figur 7,
- Figur 10: eine Seitenansicht von außen auf den Fluidkanal des Wechselkanals aus den Figuren 4 bis 9,
- Figur 11: eine Frontansicht auf den Fluidkanal des Wechseladapters aus den Figuren 4 bis 10,
- Figur 12: eine perspektivische Ansicht von oben auf einen Wechseladapter wie er in der Dose aus Figur 1 verbaut ist,
- Figur 13: eine perspektivische Ansicht von unten auf den Wechseladapter aus Figur 12,
- Figur 14: eine Ansicht von oben auf den Wechseladapter entsprechend der Figuren 12 und 13,
- Figur 15: eine Seitenansicht des Wechseladapters aus den Figuren 12 bis 14,
- Figur 16: eine Schnittdarstellung des Wechseladapters aus den Figuren 13 bis 15 entlang einer Linie XVI aus Figur 15,
- Figur 17: eine Frontansicht auf den Fluidkanal des Wechseladapters aus den Figuren 13 bis 16,
- Figur 18: eine Rückansicht des Wechseladapters aus den Figuren 13 bis 17,
- Figur 19: das Detail eines Steckvorsprunges des Wechseladapters mit darin verlaufendem Fluidkanal aus dem Detail XIX aus Figur 16,
- Figur 20: die Dose gemäß Figur 1, mit einem Nebenkontakte aufweisenden Wechseladapter und
- Figur 21: einen Stecker wie aus Figur 2 bekannt, mit einem anderen Wechseladapter zur Aufnahme der Neben kontakte des Wechseladapters aus Figur 20.

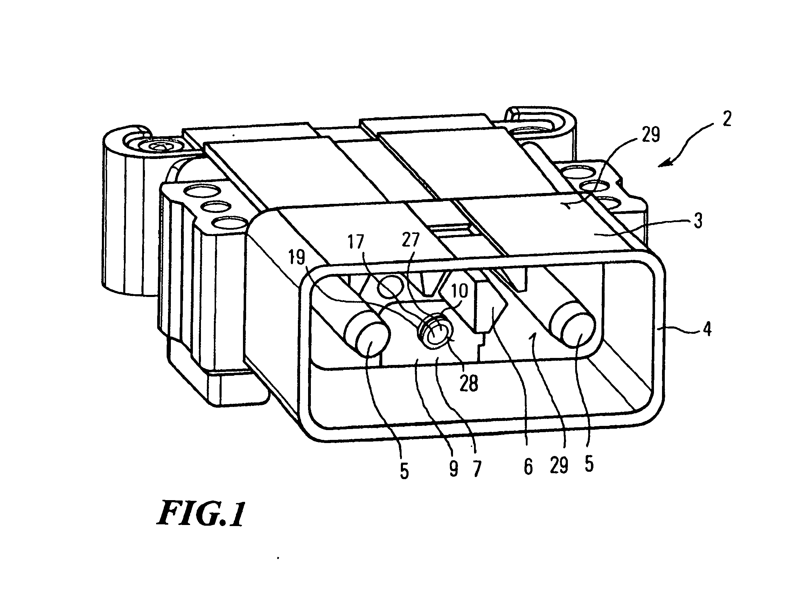

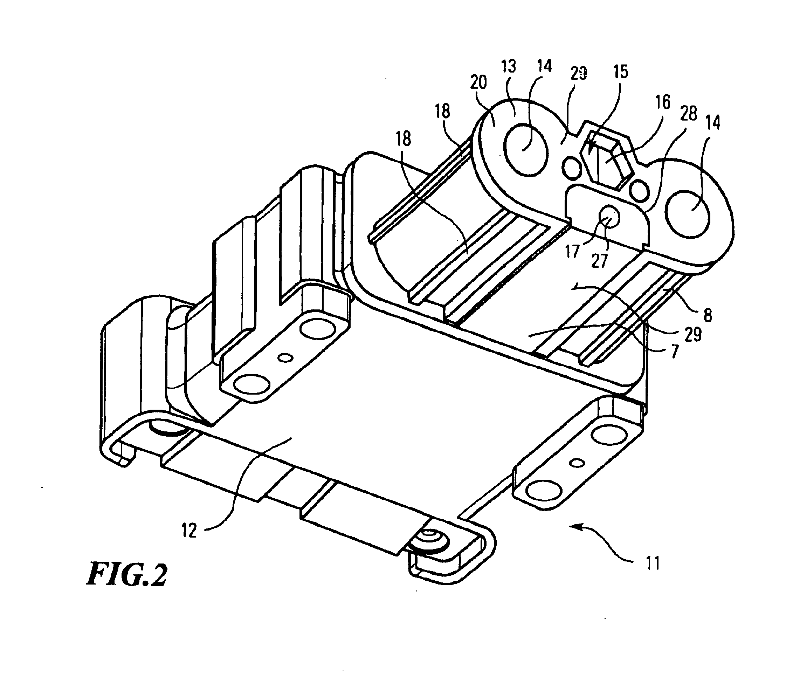

In Figur 1 ist ein Bestandteil eines Ladesteckverbindersatzes 1, nämlich die Dose 2, mit einem Dosengehäuse 3 dargestellt. Das Dosengehäuse weist eine Schürze 4 auf, welche zwei stromführende Stiftkontakte 5 umgibt. Zwischen den Stiftkontakten 5, leicht nach oben versetzt, ist ein Codierstift 6 vorgesehen. Der Codierstift 6, weist eine fünfeckige Form auf. Diese fünfeckige Form kommt dadurch zu Stande, dass ein Codierstift 6 mit einer sechseckigen Form in der Mitte geteilt wurde. Die Stiftkontakte 5 stehen nicht über die Schürze 4 hinaus. Die Schürze 4 umgibt die Stiftkontakte komplett entlang ihres Umfanges. Unterhalb einer Ebene durch die Stiftkontakte 5 ist ein Wechseladapter 7 in das Dosengehäuse 3 eingesteckt. Der Wechseladapter 7, wie er in Figur 2 dargestellt ist, ist ein Aufnahmeadapter 8, während der Wechseladapter 7, wie er in Figur 1 dargestellt ist, ein Steckadapter 9 ist. In den Aufnahmeadapter 8 wird ein Steckadapter 9 zwangseingesteckt, wenn der Ladesteckverbindersatz ineinander eingesteckt wird. Am Ende der Dose weist der Aufnahmeadapter 8 einen durch den Wechseladapter 7 hindurchlaufenden Fluidkanal 17 auf. Der Fluidkanal 17 durchdringt den gesamten Wechseladapter 7 von einem Ende 28 bis zum anderen Ende 28 des Wechseladapters 7. Das Ende 28 des Wechseladapters 7, insbesondere des Aufnahmeadapters 8, ist in das Innere der Dose 2 vom Dosengehäuse 3, insbesondere vom Ende der Schürze 4 versetzt. Der Querschnitt des runden Fluidkanals 17 ist im Wesentlichen invariabel. Der Wechseladapter 7, der als Steckadapter 9 ausgestaltet ist, weist eine Fluidführung 27 auf, die als Fluidkanal 17 ausgestaltet ist. Der Wechseladapter 7 weist zwei Enden 28 auf. An dem einen Ende 28, welches auf der Seite der Stiftkontakte 5 angeordnet ist, weist der Wechseladapter 7 einen Steckvorsprung 19 auf. Der Wechseladapter 7 bildet zumindest einen Teil der Außenfläche 29 des Dosengehäuses 3. Im Bereich des Steckvorsprunges 19, bündig mit der im Inneren der Schürze 4 befindlichen Außenfläche 29 des Dosengehäuses 3, bildet der Wechseladapter einen Teil der Außenfläche 29 des Dosengehäuses 3. Er kann auch außerhalb der Schürze 4 einen Teil der Außenfläche 29 des Dosengehäuses 3 bilden. Der Steckvorsprung 19 weist auf der Außenseite eine ringförmige Vertiefung 10 in Form einer Nut auf. In diese ringförmige Vertiefung 10 kann ein Dichtring eingesetzt werden.

In allen Figuren werden für die selben Bauteile die selben Bezugszeichen verwendet.

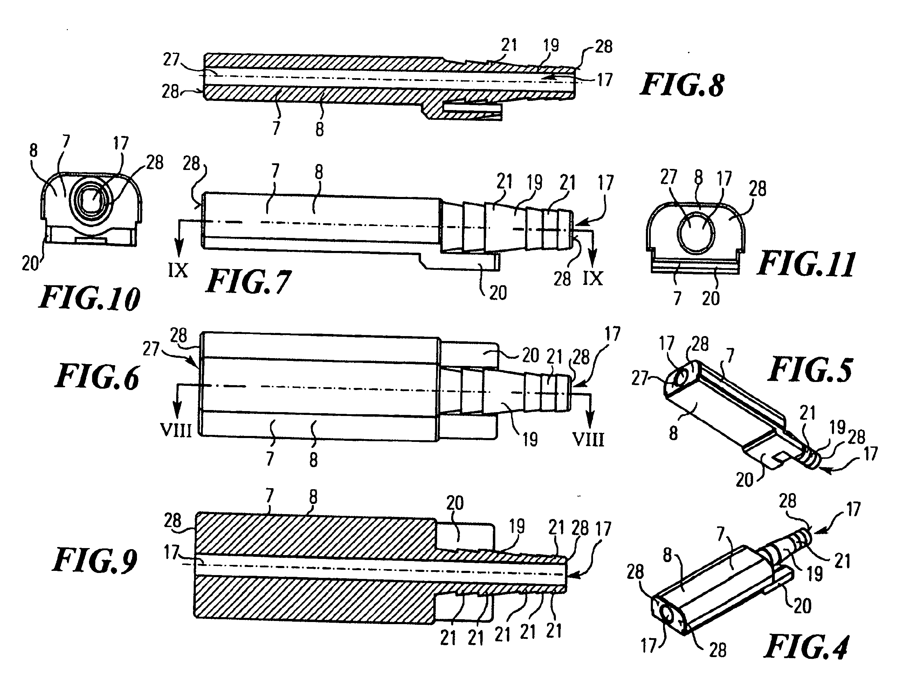

In Figur 2 ist ein weiteres Bauteil des Ladesteckverbindersatzes 1, und zwar der Stecker 11 dargestellt. Der Stecker 11 weist ein Steckergehäuse 12 auf, wobei ein Teil des Steckergehauses 12 als Steckvorsprung 13 ausgebildet ist. In dem Steckvorsprung 13 sind parallel zur Längsachse des Steckers 11, Stiftkontaktaufnahmeausnehmungen 14 vorgesehen. Oberhalb einer Ebene durch die Stiftkontaktaufnahmeausnehmungen 14 ist ein Codierstift 15 in einer Codierstiftaufnahme 16 vorgesehen. In die Codierstiftaufnahme 16 werden neben dem Codierstift 15 des Steckers 11 im zusammengesteckten Zustand von Dose 2 und Stecker 11, auch der Codierstift 6 der Dose 2 eingesetzt. Sind die zwei Codierstifte 6 und 15 entsprechend gegengleich zueinander ausgerichtet, so ist ein Zusammenstecken von Dose 2 und Stecker 11 möglich. Ist einer der zwei Codierstifte 6 oder 15 verdreht, so ist ein Zusammenstecken von Dose 2 und Stecker 11 nicht möglich. Unterhalb einer Mittelebene durch die Stiftkontaktaufnahmeausnehmungen 14 ist ein Wechseladapter 7, nämlich ein Aufnahmeadapter 8 vorgesehen. Dieser Aufnahmeadapter 8 hat an einem seiner Enden 28, mit dem Ende des Steckvorsprunges 13 fluchtend, eine Fluidzweigkanal 17 ausgebildet. Der Fluidkanal 17 läuft parallel zur Längsachse des Wechseladapters 7. Der Fluidkanal 17 ist besonders gut in den Figuren 8, 9 und 16 zu sehen. Auf der Außenseite des Steckvorsprunges sind Stege 18 ausgeformt. In den Fluidkanal 17, der an dem mit dem Steckvorsprung 13 fluchtenden Ende 28 des Wechseladapters rund ausgebildet ist, greift im zusammengesteckten Zustand des Ladesteckverbindersatzes der Steckvorsprung 19 des als Steckadapter 9 ausgeformten Wechseladapters 7 ein.

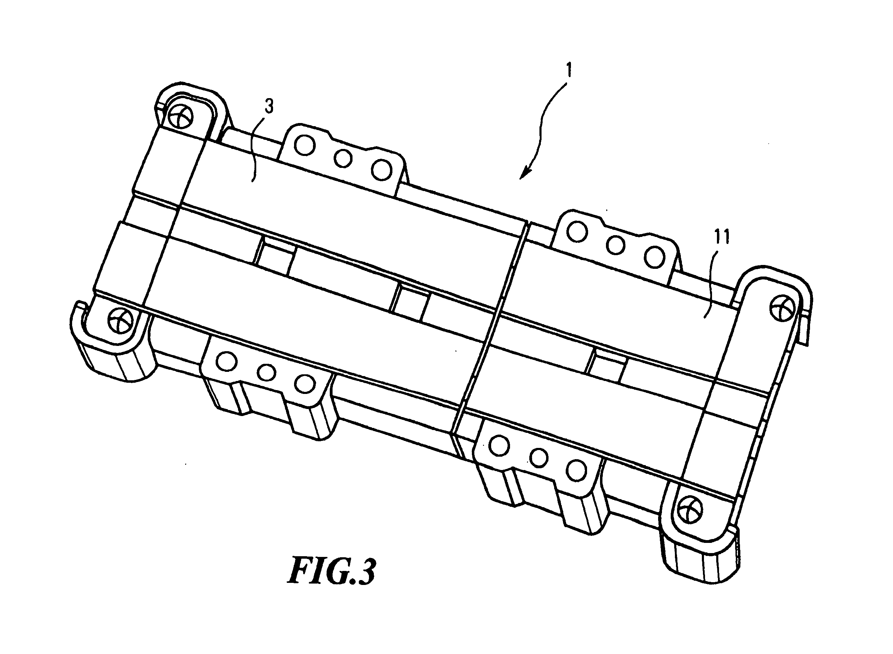

In Figur 3 ist der zusammengesteckte Zustand von dem Ladesteckverbindersatz 1, bestehend aus Dose 2 und Stecker 11, mit darin integrierten Wechseladaptem 7 dargestellt.

In der Figur 4 ist ein Wechseladapter 7, in Form eines Steckadapters 9 dargestellt. Der Fluidkanal 17, der die Fluidführung 27 bildet, verläuft von einem Ende 28 des Wechseladapters 7 bis zu dem anderen Ende 28 des Wechseladapters 7. Im Inneren des Aufnahmeadapters 8 verläuft der Fluidkanal 17 bezüglich des Durchmessers im Wesentlichem invariant. Der Fluidkanal 17 endet auf der einen Seite des einen Endes 28 in einem Steckvorsprung 19. Auf der Unterseite des Aufnahmeadapters ist eine axiale Befestigungslasche 20 ausgebildet. Die Befestigungslasche gerät in bündigen Kontakt mit dem Dosengehäuse 3 oder dem Steckergehäuse 12.

In Figur 5 ist ein Wechseladapter 7, und zwar der Aufnahmeadapter 8 aus Figur 4 dargestellt. Auf der Außenseite des Steckvorsprunges 19 sind Rückhaltevorsprünge 21 vorgesehen. Die Rückhaltevorsprünge 21 werden durch außen eingearbeitete Riefen erzeugt. Die Rückhaltevorsprünge 21 sind konisch ausgebildet. Dies ist auch besonders gut in den Figuren 6, 7, 8 und 9 zu sehen.

In Figur 6 ist die Oberflächenform des Aufnahmeadapters 8 mit über den Hauptbereich des Aufnahmeadapters 8 hinausragender Befestigungslasche 20 dargestellt. Der Steckvorsprung 19 ragt allerdings in Längsrichtung des Adapters über die Befestigungslasche 20 hinaus.

In Figur 7 ist dargestellt, dass sich die Befestigungslasche 20 unterhalb des Steckvorsprunges 19 in Richtung des Endes des Fluidkanales 17, fem von der Mitte des Aufnahmeadapters 8 hinerstreckt. Der Steckvorsprung 19 ist von der Befestigungslasche 20 beabstandet.

In Figur 8 ist die Durchgängigkeit des Fluidkanals 17 von einem Ende 28 des Wechseladapters 7 bis zu dem anderen Ende 28 des Wechseladapters 7 dargestellt.

In Figur 9 ist auch dargestellt, dass der Fluidkanal bezüglich des Durchmessers im Wesentlichen invariant ist.

Die Figuren 10 und 11 zeigen den einen Fluidkanal 17 von je einem Ende 28 des Wechseladapters 7 ausgesehen.

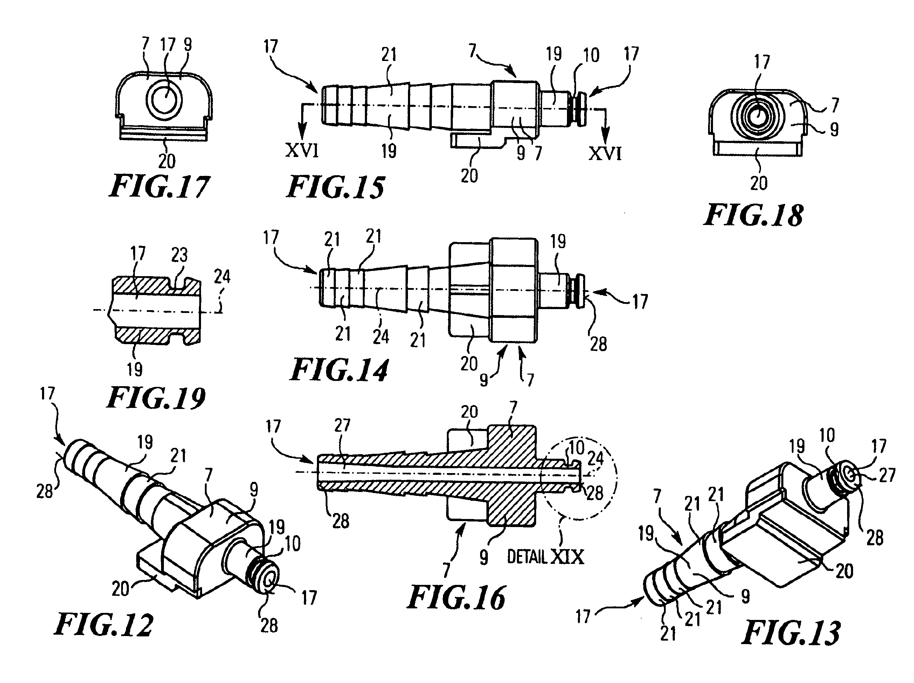

In Figur 12 ist auch ein weiterer Wechseladapter 7 dargestellt. Der Wechseladapter 7 in Figur 12 ist ein Steckadapter 9. Der Steckadapter 9 hat auch einen Fluidkanal 17. Der Durchmesser des Fluidkanals 17 ist auch im Wesentlichen invariant. An beiden Enden 28 des Wechseladapters 7 endet der Fluidkanal 17 in einem Steckvorsprung 19. Die Steckvorsprünge 19 auf jeder Seite des Wechseladapters sind unterschiedlich ausgestaltet. So ist auf der einen Seite der Steckvorsprung 19 mit konischen Rückhaltevorsprüngen 21 versehen, während auf der anderen Seite des Wechseladapters 7 der Steckvorsprung 19 nur eine ringförmige Vertiefung 10 zum Aufnehmen eines Dichtringes aufweist.

Auch der Steckadapter 9 weist eine axiale Befestigungslasche 20 auf. Diese Befestigungslasche 20 gerät in eingreifenden Kontakt mit dem Dosengehäuse 3 oder dem Steckergehäuse 12.

In Figur 13 ist auch ein Absatz der Befestigungslasche 20 dargestellt.

Aus Figur 14 ist auch die Mittelachse 24 durch die Fluidführung 27, in Form des Fluidkanals 17 ersichtlich. Die Mittelachse 24, ist sowohl die Mittelachse durch den Steckvorsprung 19, auch die Mittelachse durch den Fluidkanal 17, als auch die Mittelachse durch den Wechseladapter 7. Die Mittelachse 24 ist gleichzeitig auch eine Symmetrieachse.

Die Figur 16 zeigt die Durchgängikeit des Fluidkanals 17 in gerader Linie durch den Wechseladapter 7.

Die Figuren 17 und 18 stellen den Steckadapter 9 in einer Frontansicht auf je ein Ende 28 des Wechseladapters 7 dar.

In Figur 19 ist der im Wesentlichen invariante Durchmesser des Fluidkanals 17 durch den Steckvorsprung 19 dargestellt.

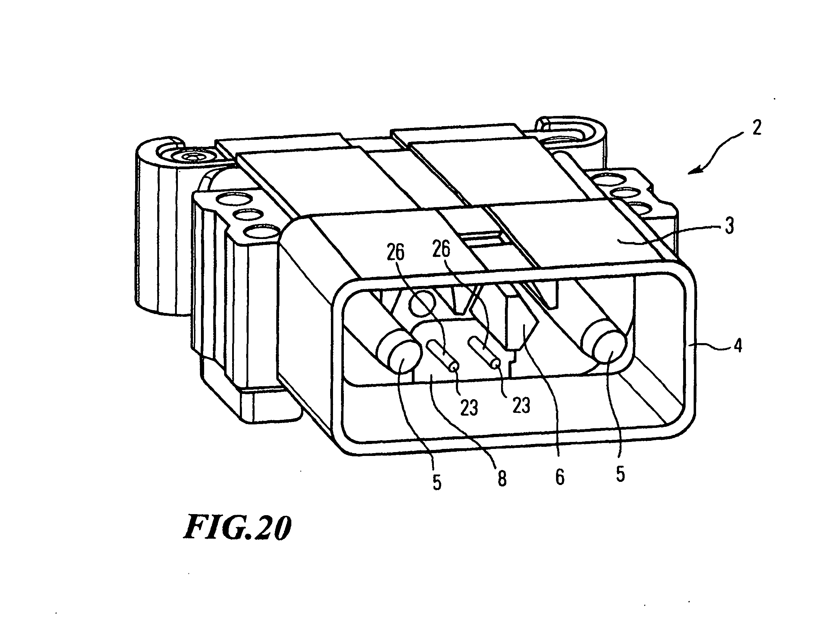

In Figur 20 ist ein abgewandelter Wechseladapter 7 mit zwei Pilotkontakten 23 oder Nebenkontakten 26 dargestellt. Die Nebenkontakte 26 sind parallel zu den Stiftkontakten 5 ausgebildet. Auch die Nebenkontakte 26 ragen nicht über die Schürze 4 hinaus.

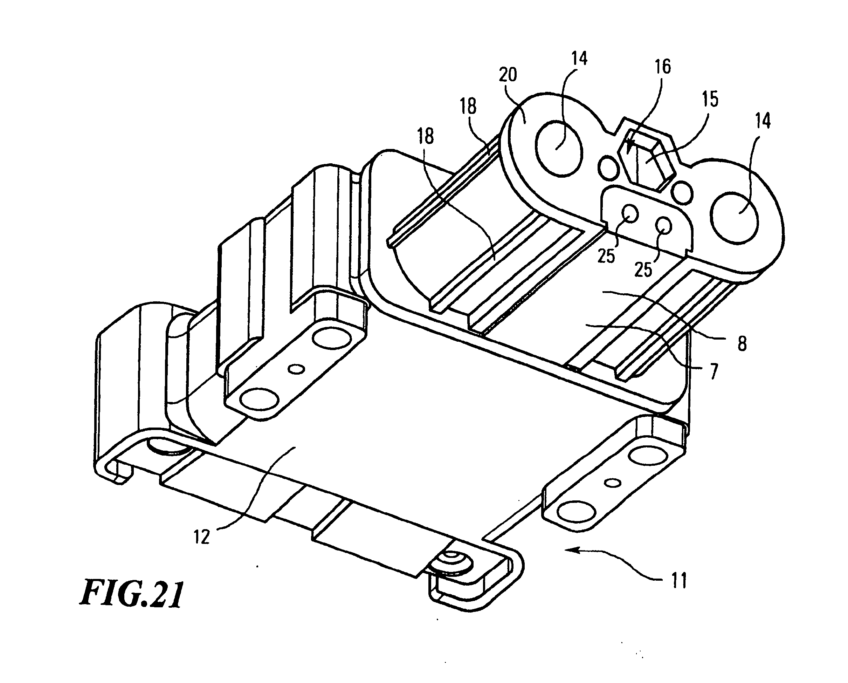

Ein weiterer Wechseladapter 7 ist in Figur 21 dargestellt. Der in dem Stecker 11 eingesetzte Wechseladapter 7 weist dabei zwei runde Vertiefungen, in Form von Nebenkontaktaufnahmen 25 auf, in den die Nebenkontakte 26 des Wechseladapters 7 aus Figur 20 eingesetzt werden.

Im Folgenden wird die Funktions- und Wirkungsweise der Erfindung näher beschrieben.

Ein Wechseladapter 7, und zwar entweder ein Aufnahmeadapter 8 oder ein Steckadapter 9 wird in das Dosengehäuse 3 oder in das Steckergehäuse 12 eingesetzt. Dabei wird jeweils ein Aufnahmeadapter 8 und ein Steckadapter 9 in je einem Bestandteil des Ladesteckverbindersatzes 1 und zwar in die Dose 1 und in den Stecker 11 eingesetzt. Werden Stecker 11 und Dose 2 zusammengesteckt, so geraten die Stiftkontakte in die Stiftkontaktaufnahmeausnehmungen 14 und ermöglichen eine Stromübertragung. Es wird dabei im besonderen Starkstrom übertragen. Dabei gerät gleichzeitig der Steckvorsprung 19, welcher den Fluidkanal 17 beherbergt, in gesteckten Kontakt mit den Fluidkanal 17 des Aufnahmeadapters 8. Zwischen Aufnahmeadapter 8 und den Steckadapter 9 entsteht somit eine fluiddichte Kupplung. Fluid gelangt in der Folge von dem Aufnahmeadapter 8 durch den Fluidkanal 17 in den Fluidkanal 17 des Steckadapters 9 oder umgekehrt. Die Wechseladapter 7 sind einfach austauschbar, so dass eine große Anzahl von Kombinationen von Steckverbindungen möglich ist.

## Patentansprüche

1. Ladesteckverbindersatz (1) mit einem ein Steckergehäuse (12) aufweisenden Stecker (11) und einer ein Dosengehäuse (3) aufweisenden Dose (2), **dadurch gekennzeichnet, dass** sowohl in den Stecker (11) der Dose (2) zugewandt, ein Wechseladapter (7) eingesetzt ist, als auch in die Dose (2), den Stecker (11) zugewandt, einen Wechseladapter (7) eingesetzt ist, wobei wenigstens einer der Wechseladapter (7) auswechselbare Nebenkontakte (26) und/oder Fluidführungen (27) aufweist, wobei der eine Wechseladapter (7) mit zumindest einem Teil des Endes (28) des einen Wechseladatpers (7) in zumindest einen Teil des anderen Wechseladapters (7) einsteckbar ist, wobei sowohl der im Stecker (11) eingesetzte Wechseladapter (7) wenigstens zum Teil die Außenfläche (29) des Steckergehäuses (12) ausbildet, als auch der in die Dose (2) eingesetzte Wechseladapter (7) wenigstens einen Teil der Außenfläche (29) des Dosengehäuses (3) ausbildet.

2. Ladesteckverbindersatz (1) nach Anspruch 1, **dadurch gekennzeichnet, dass** der Wechseladapter (7) nur einen Fluidkanal (17) zum Durchführen von Fluiden aufweist.

3. Ladesteckverbindersatz (1) nach Anspruch 1 oder 2, **dadurch gekennzeichnet, dass** der eine Wechseladapter (7) einen hohlen Zylinder als Ende (28) aufweist.

4. Ladesteckverbindersatz (1) nach einem der Ansprüche 1 bis 3, **dadurch gekennzeichnet, dass** der andere Wechseladapter (7) eine zylindrische Vertiefung in Längsrichtung des Wechseladapters (7) in Verlängerung des Fluidkanals (17) des Wechseladapters (7) aufweist.

5. Ladesteckverbindersatz (1) nach einem der Ansprüche 1 bis 4, **dadurch gekennzeichnet, dass** der Wechseladapter (7) zwei zueinander parallele Fluidführungen (27) in Form von Fluidkanälen (17) aufweist.

6. Ladesteckverbindersatz (1) nach Anspruch 5, **dadurch gekennzeichnet, dass** der Wechseladapter (7) zwei hohle Zylinder als Enden (28) auf einer Seite des Wechseladapters (7) aufweist.

7. Ladesteckverbindersatz (1) nach Anspruch 5 oder 6, **dadurch gekennzeichnet, dass** die zwei hohlen Zylinder im zusammengesteckten Zustand vom Dosengehäuse (3) und Steckergehäuse (12) in zwei zylindrische Vertiefungen des anderen Wechseladapters (7) dichtend eingesteckt sind.

8. Ladesteckverbindersatz (1) nach einem der Ansprüche 1 bis 7, **dadurch gekennzeichnet, dass** im zumindest einen der Fluidkanäle (17) des Wechseladapters (7) Mess- und/oder Schaltelemente einsetzbar sind.

9. Ladesteckverbindersatz (1) nach einem der Ansprüche 1 bis 8, **dadurch gekennzeichnet, dass** der Wechseladapter (7), im in dem Gehäuse der Dose (2) oder des Steckers (11) eingesetzten Zustand, dem in den Stecker (11) oder die Dose (2) eingesetzten Aufnahmeadapter (8) gegenüberliegend, zwei elektrische Nebenkontakte (26) aufweist.

10. Ladesteckverbindersatz (1) nach einem der vorstehenden Ansprüche, **dadurch gekennzeichnet, dass** der andere Wechseladapter (7) zwei Nebenkontaktaufnahmen (25) zum Aufnehmen zweier elektrischer Nebenkontakte (26) des einen Wechseladapters (7) aufweist.

11. Ladesteckverbindersatz (1) nach einem der vorstehenden Ansprüche, **dadurch gekennzeichnet, dass** als Mess- und/oder Schaltelemente Strom-, Lichtwellen- oder Näherungsschalter vorgesehen sind.

12. Ladesteckverbindersatz nach einem der vorstehenden Ansprüche, **dadurch gekennzeichnet, dass** zumindest einer der Wechseladapter (7) spritzgusstechnisch hergestellt ist.

13. Ladesteckverbindersatz (1) nach einem der vorstehenden Ansprüche, **dadurch gekennzeichnet, dass** der Fluidkanal (17) in einem Steckvorsprung (19) endet.

14. Ladesteckverbindersatz (1) nach einem der vorstehenden Ansprüche, **dadurch gekennzeichnet, dass** zumindest einer der Steckvorsprünge (19) radiale Rückhaltevorsprünge (21) aufweist.

15. Ladesteckverbindersatz (1) nach einem der vorstehenden Ansprüche, **dadurch gekennzeichnet, dass** zumindest einer der Steckvorsprünge (19) in dem der Fluidkanäle (17) endet, radiale Vertiefungen (10) zur Aufnahme von Dichtringen aufweist.

16. Ladesteckverbindersatz (1) nach einem der vorstehenden Ansprüche, **dadurch gekennzeichnet, dass** der Wechseladapter (7) zu einer Ebene durch die Längsachse des Wechseladapters (7) symmetrisch aufgebaut ist.

17. Ladesteckverbindersatz (1) nach einem der vorstehenden Ansprüche, **dadurch gekennzeichnet, dass** der Wechseladapter (7) eine axial abstehende Befestigungslasche (20) aufweist.

## Claims

1. Charging plug connector set (1) with a plug (11) having a plug housing (12) and with a socket (2) having a socket housing (3), **characterized in that** an exchangeable adapter (7) is inserted, facing the socket (2), into the plug (11) and an exchangeable adapter (7) is inserted, facing the plug (11), into the socket (2), at least one of the exchangeable adapters (7) having exchangeable secondary contacts (26) and/or fluid ducts (27), one exchangeable adapter (7) being capable of being plugged with at least one part of the end (28) of the one exchangeable adapter (7) into at least one part of the other exchangeable adapter (7), both the exchangeable adapter (7) inserted in the plug (11) forming at least partially the outer face (29) of the plug housing (12) and the exchangeable adapter (7) inserted into the socket (2) forming at least part of the outer face (29) of the socket housing (3).

2. Charging plug connector set (1) according to Claim 1, **characterized in that** the exchangeable adapter (7) has only one fluid conduit (17) for conducting fluids.

3. Charging plug connector set (1) according to Claim 1 or 2, **characterized in that** one exchangeable adapter (7) has a hollow cylinder as the end (28).

4. Charging plug connector set (1) according to one of Claims 1 to 3, **characterized in that** the other exchangeable adapter (7) has a cylindrical depression in the longitudinal direction of the exchangeable adapter (7) in the prolongation of the fluid conduit (17) of the exchangeable adapter (7).

5. Charging plug connector set (1) according to one of Claims 1 to 4, **characterized in that** the exchangeable adapter (7) has two fluid ducts (27) parallel to one another in the form of fluid conduits (17).

6. Charging plug connector set (1) according to Claim 5, **characterized in that** the exchangeable adapter (7) has two hollow cylinders as ends (28) on one side of the exchangeable adapter (7).

7. Charging plug connector set (1) according to Claim 5 or 6, **characterized in that** the two hollow cylinders are plugged sealingly into two cylindrical depressions of the other exchangeable adapter (7) when the socket housing (3) and plug housing (12) are in the plugged-together state.

8. Charging plug connector set (1) according to one of Claims 1 to 7, **characterized in that** measuring and/or switching elements can be inserted into at least one of the fluid conduits (17) of the exchangeable adapter (7).

9. Charging plug connector set (1) according to one of Claims 1 to 8, **characterized in that** the exchangeable adapter (7) has, in the state inserted in the housing of the socket (2) or of the plug (11), two electrical secondary contacts (26) lying opposite the reception adapter (8) inserted into the plug (11) or into the socket (2).

10. Charging plug connector set (1) according to one of the preceding claims, **characterized in that** the other exchangeable adapter (7) has two secondary-contact receptacles (25) for receiving two electrical secondary contacts (26) of the one exchangeable adapter (7).

11. Charging plug connector set (1) according to one of the preceding claims, **characterized in that** the measuring and/or switching elements provided are power, light-wave or proximity switches.

12. Charging plug connector set according to one of the preceding claims, **characterized in that** at least one of the exchangeable adapters (7) is produced by injection moulding.

13. Charging plug connector set (1) according to one of the preceding claims, **characterized in that** the fluid conduit (17) ends in a plug projection (19).

14. Charging plug connector set (1) according to one of the preceding claims, **characterized in that** at least one of the plug projections (19) has radial retention projections (21).

15. Charging plug connector set (1) according to one of the preceding claims, **characterized in that** at least one of the plug projections (19), in which the fluid conduit (17) ends, has radial depressions (10) for the reception of sealing rings.

16. Charging plug connector set (1) according to one of the preceding claims, **characterized in that** the exchangeable adapter (7) is constructed symmetrically with respect to a plane through the longitudinal axis of the exchangeable adapter (7).

17. Charging plug connector set (1) according to one of the preceding claims, **characterized in that** the exchangeable adapter (7) has an axially protruding fastening tab (20).

## Revendications

1. Dispositif de connexion de charge (1) comportant un connecteur (11) ayant un boîtier de connecteur (12) et une prise (2) avec un boîtier de prise (3),
**caractérisé en ce qu'**
- à la fois le connecteur (11) côté tourné vers la prise (2) comporte un adaptateur interchangeable (7) et la prise (2) côté tourné vers le connecteur (11) comporte un adaptateur interchangeable (7),
- au moins l'un des adaptateurs interchangeables (7) ayant des contacts auxiliaires (26) interchangeables et/ou des conduites de fluide (27),
- l'un des adaptateurs interchangeables (7) s'engageant avec au moins une partie de son extrémité (28) dans au moins une partie de l'autre adaptateur interchangeable (7),
- à la fois l'adaptateur interchangeable (7) engagé dans le connecteur (11) constitue au moins en partie la surface extérieure (29) du boîtier de connecteur (12) et aussi l'adaptateur interchangeable (7) engagé dans la prise (2) constitue au moins une partie de la surface extérieure (29) du boîtier de prise (3).

2. Dispositif de connexion de charge (1) selon la revendication 1,
**caractérisé en ce que**
l'adaptateur interchangeable (7) comporte seulement un canal de fluide (17) pour le passage de fluide.

3. Dispositif de connexion de charge (1) selon la revendication 1 ou 2,
**caractérisé en ce que**
l'extrémité (28), l'un des adaptateurs interchangeables (7) comporte un cylindre creux

4. Dispositif de connexion de charge (1) selon l'une des revendications 1 à 3,
**caractérisé en ce que**
l'autre adaptateur interchangeable (7) comporte une cavité cylindrique dans sa direction longitudinale, dans le prolongement du canal de fluide (17) de l'adaptateur interchangeable (7).

5. Dispositif de connexion de charge (1) selon l'une des revendications 1 à 4,
**caractérisé en ce que**
l'adaptateur interchangeable (7) comporte deux conduites de fluide (27), parallèles, sous la forme de canaux de fluide (17).

6. Dispositif de connexion de charge (1) selon la revendication 5,
**caractérisé en ce que**
l'extrémité (28) d'un côté de l'adaptateur interchangeable (7) comporte deux cylindres creux.

7. Dispositif de connexion de charge (1) selon la revendication 5 ou 6,
**caractérisé en ce qu'**
à l'état assemblé du boîtier de prise (3) et du boîtier de connecteur (12), les deux cylindres creux sont engagés de manière étanche dans deux cavités cylindriques de l'autre adaptateur interchangeable (7).

8. Dispositif de connexion de charge (1) selon l'une des revendications 1 à 7,
**caractérisé en ce qu'**
au moins l'un des canaux de fluide (17) de l'adaptateur interchangeable (7), reçoit des éléments de mesure et/ou de commutation.

9. Dispositif de connexion de charge (1) selon l'une des revendications 1 à 8,
**caractérisé en ce que**
l'adaptateur interchangeable (7) à l'état engagé dans le boîtier de la prise (2) ou du connecteur (11) en regard de l'adaptateur de réception (8) placé dans le connecteur (11) ou la prise (2), comporte deux contacts électriques auxiliaires (26) qui se font face.

10. Dispositif de connexion de charge (1) selon l'une des revendications précédentes,
**caractérisé en ce que**
l'autre adaptateur interchangeable (7) comporte deux logements auxiliaires de contact (25) pour recevoir deux contacts électriques auxiliaires (26) de l'un des adaptateurs interchangeables (7).

11. Dispositif de connexion de charge (1) selon l'une des revendications précédentes,
**caractérisé par**
des éléments de mesure et/ou de commutation sont des commutateurs de courant, des commutateurs de lumière ou des commutateurs de proximité.

12. Dispositif de connexion de charge (1) selon l'une des revendications précédentes,
**caractérisé en ce qu'**
au moins l'un des adaptateurs interchangeables (7) est fabriqué par injection.

13. Dispositif de connexion de charge (1) selon l'une des revendications précédentes,
**caractérisé en ce que**
le canal de fluide (17) se termine dans une partie en saillie d'enfichage (19).

14. Dispositif de connexion de charge (1) selon l'une des revendications précédentes,
**caractérisé en ce qu'**
au moins l'une des parties en saillie d'enfichage (19) comporte des saillies radiales de retenue (21).

15. Dispositif de connexion de charge (1) selon l'une des revendications précédentes,
**caractérisé en ce qu'**
au moins l'une des saillies d'enfichage (19) se termine dans l'un des canaux à fluide (17) et comporte des cavités radiales (10) pour recevoir des bagues d'étanchéité.

16. Dispositif de connexion de charge (1) selon l'une des revendications précédentes,
**caractérisé en ce que**
l'adaptateur interchangeable (7) est réalisé de manière symétrique par rapport à un plan passant par son axe longitudinal.

17. Dispositif de connexion de charge (1) selon l'une des revendications précédentes,
**caractérisé en ce que**
l'adaptateur interchangeable (7) comporte une patte de fixation (20) venant axialement en saillie.
